(19) Europäisches Patentamt / European Patent Office / Office européen des brevets

(11) **EP 3 555 575 B1**

(12) **EUROPÄISCHE PATENTSCHRIFT**

(45) Veröffentlichungstag und Bekanntmachung des Hinweises auf die Patenterteilung:
**09.11.2022 Patentblatt 2022/45**

(21) Anmeldenummer: **17818447.9**

(22) Anmeldetag: **01.12.2017**

(51) Internationale Patentklassifikation (IPC):
**G01F 23/296** *(2022.01)* **G01F 25/20** *(2022.01)*
**G01N 9/00** *(2006.01)* **G01N 11/16** *(2006.01)*

(52) Gemeinsame Patentklassifikation (CPC):
**G01F 23/2967; G01F 25/20; G01N 9/002;**
**G01N 11/16;** G01N 2009/006

(86) Internationale Anmeldenummer:
**PCT/EP2017/081127**

(87) Internationale Veröffentlichungsnummer:
**WO 2018/114281 (28.06.2018 Gazette 2018/26)**

(54) **VIBRONISCHER SENSOR MIT STÖRSIGNAL KOMPENSATION**

VIBRONIC SENSOR WITH COMPENSATION FOR PARASITIC SIGNALS

CAPTEUR DU TYPE VIBRONIQUE AVEC COMPENSATION DE SIGNAUX PARASITES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2016 DE 102016124740**

(43) Veröffentlichungstag der Anmeldung:
**23.10.2019 Patentblatt 2019/43**

(73) Patentinhaber: **Endress+Hauser SE+Co. KG**
**79689 Maulburg (DE)**

(72) Erfinder:
• **MONSE, Benjamin**
**79235 Vogtsburg (DE)**

• **DÖTSCH, Michael**
**79736 Rickenbach (DE)**
• **WEBER, Tobias**
**79618 Rheinfelden (DE)**

(74) Vertreter: **Koslowski, Christine Adelheid**
**Endress+Hauser Group Services**
**(Deutschland) AG+Co. KG**
**Colmarer Straße 6**
**79576 Weil am Rhein (DE)**

(56) Entgegenhaltungen:
**EP-A1- 3 056 877 DE-A1- 10 131 081**

**Beschreibung**

Die Erfindung betrifft ein Verfahren sowie eine Vorrichtung zur Bestimmung und/oder Überwachung mindestens einer Prozessgröße eines Mediums in einem Behälter. Alternativ kann sich das Medium, für welches eine Prozessgröße bestimmt wird, auch in einer Rohrleitung befinden. Bei der Vorrichtung handelt es sich um einen sogenannten vibronischen Sensor.

Vibronische Sensoren finden vielfach Verwendung in der Prozess- und/oder Automatisierungstechnik. Im Falle von Füllstandsmessgeräten weisen sie zumindest eine mechanisch schwingfähige Einheit, wie beispielsweise eine Schwinggabel, einen Einstab oder eine Membran auf. Diese wird im Betrieb mittels einer Antriebs-/Empfangseinheit, häufig in Form einer elektromechanischen Wandlereinheit zu mechanischen Schwingungen angeregt, welche wiederum beispielsweise ein piezoelektrischer Antrieb oder ein elektromagnetischer Antrieb sein kann. Die mechanisch schwingfähige Einheit kann im Falle von Durchflussmessgeräten aber auch als schwingfähiges Rohr ausgebildet sein, welches von dem jeweiligen Medium durchflossen wird, wie beispielsweise in einem nach dem Coriolis-Prinzip arbeitenden Messgerät.

Entsprechende Feldgeräte werden von der Anmelderin in großer Vielfalt hergestellt und im Falle von Füllstandsmessgeräten beispielsweise unter der Bezeichnung LIQUIPHANT oder SOLIPHANT vertrieben. Die zugrundeliegenden Messprinzipien sind im Prinzip aus einer Vielzahl von Veröffentlichungen bekannt. Die Antriebs-/Empfangseinheit regt die mechanisch schwingfähige Einheit mittels eines elektrischen Anregesignals zu mechanischen Schwingungen an. Umgekehrt kann die Antriebs-/Empfangseinheit die mechanischen Schwingungen der mechanisch schwingfähigen Einheit empfangen und in ein elektrisches Empfangssignal umwandeln. Bei der Antriebs-/Empfangseinheit handelt es sich entsprechend entweder um eine separate Antriebseinheit und eine separate Empfangseinheit, oder um eine kombinierte Antriebs-/Empfangseinheit.

Dabei ist die Antriebs-/Empfangseinheit in vielen Fällen Teil eines rückgekoppelten elektrischen Schwingkreises, mittels welchem die Anregung der mechanisch schwingfähigen Einheit zu mechanischen Schwingungen erfolgt. Beispielsweise muss für eine resonante Schwingung die Schwingkreisbedingung, gemäß welcher der Verstärkungsfaktor ≥1 ist und alle im Schwingkreis auftretenden Phasen ein Vielfaches von 360° ergeben, erfüllt sein.

Zur Anregung und Erfüllung der Schwingkreisbedingung muss eine bestimmte Phasenverschiebung zwischen dem Anregesignal und dem Empfangssignal gewährleistet sein. Deshalb wird häufig ein vorgebbarer Wert für die Phasenverschiebung, also ein Sollwert für die Phasenverschiebung zwischen dem Anregesignal und dem Empfangssignal eingestellt. Hierfür sind aus dem Stand der Technik unterschiedlichste Lösungen, sowohl analoge als auch digitale Verfahren, bekannt geworden. Prinzipiell kann die Einstellung der Phasenverschiebung beispielsweise durch Verwendung eines geeigneten Filters vorgenommen werden, oder auch mittels eines Regelkreises auf eine vorgebbare Phasenverschiebung, den Sollwert, geregelt werden. Aus der DE102006034105A1 ist beispielsweise bekannt geworden, einen einstellbaren Phasenschieber zu verwenden. Die zusätzliche Integration eines Verstärkers mit einstellbarem Verstärkungsfaktor zur zusätzlichen Regelung der Schwingungsamplitude wurde dagegen in der DE102007013557A1 beschrieben. Die DE102005015547A1 schlägt die Verwendung eines Allpass-Filters vor. Die Einstellung der Phasenverschiebung ist außerdem mittels eines sogenannten Frequenzsuchlaufs möglich, wie beispielsweise in der der DE102009026685A1, DE102009028022A1, und DE102010030982A1 offenbart. Die Phasenverschiebung kann aber auch mittels einer Phasenregelschleife (engl. Phase-Locked-Loop, PLL) auf einen vorgebbaren Wert geregelt werden. Ein hierauf basierendes Anregungsverfahren ist Gegenstand der DE00102010030982A1.

Sowohl das Anregesignal als auch das Empfangssignal sind charakterisiert durch ihre Frequenz $\omega$, Amplitude A und/oder Phase $\Phi$. Entsprechend werden Änderungen in diesen Größen üblicherweise zur Bestimmung der jeweiligen Prozessgröße herangezogen, wie beispielsweise ein vorgegebener Füllstand eines Mediums in einem Behälter, oder auch die Dichte und/oder Viskosität eines Mediums oder der Durchfluss eines Mediums durch ein Rohr. Im Falle eines vibronischen Grenzstandschalters für Flüssigkeiten wird beispielsweise unterschieden, ob die schwingfähige Einheit von der Flüssigkeit bedeckt ist oder frei schwingt. Diese beiden Zustände, der Freizustand und der Bedecktzustand, werden dabei beispielsweise anhand unterschiedlicher Resonanzfrequenzen, also einer Frequenzverschiebung, unterschieden. Die Dichte und/oder Viskosität wiederum lassen sich mit einem derartigen Messgerät nur ermitteln, wenn die schwingfähige Einheit vom Medium bedeckt ist.

Wie beispielweise in der DE10050299A1 beschrieben, kann die Viskosität eines Mediums mittels eines vibronischen Sensors anhand der Frequenz-Phase-Kurve ($\Phi=g((\omega))$) bestimmt werden. Dieses Vorgehen basiert auf der Abhängigkeit der Dämpfung der schwingfähigen Einheit von der Viskosität des jeweiligen Mediums. Dabei gilt, dass je geringer die Viskosität ist, desto steiler fällt die Frequenz-Phase-Kurve ab. Um den Einfluss der Dichte auf die Messung zu eliminieren, wird die Viskosität anhand einer durch zwei unterschiedliche Werte für die Phase verursachten Frequenzänderung bestimmt, also mittels einer Relativmessung. Dazu können entweder zwei unterschiedliche Phasenwerte eingestellt und die zugehörige Frequenzänderung bestimmt werden, oder es wird ein vorgegebenes Frequenzband durchfahren und festgestellt, wenn zumindest zwei vorgegebene Phasenwerte erreicht werden.

Aus der DE102007043811A1 ist darüber hinaus bekannt geworden, aus einer Änderung der Eigenfrequenz und/oder Resonanzfrequenz und/oder der Phasenlage auf eine Änderung der Viskosität zu schließen und/oder aufgrund entsprechend hinterlegter Abhängigkeiten der Schwingungen der schwingfähigen Einheit von der Viskosität des jeweiligen Mediums die Viskosität zu bestimmen. Auch bei diesem Vorgehen muss die Abhängigkeit der Bestimmung der Viskosität von der Dichte des Mediums berücksichtigt werden.

Zur Bestimmung und/oder Überwachung der Dichte eines Mediums sind aus der DE10057974A1 ein Verfahren sowie eine Vorrichtung bekannt geworden, mittels welcher/welchem der Einfluss von zumindest einer Störgröße, beispielswese der Viskosität, auf die Schwingungsfrequenz der mechanisch schwingfähigen Einheit zu ermitteln und entsprechend zu kompensieren. In der DE102006033819A1 ist ferner beschrieben, eine vorgebbare Phasenverschiebung zwischen dem Anregesignal und dem Empfangssignal einzustellen, bei welcher Auswirkungen von Änderungen der Viskosität des Mediums auf die mechanischen Schwingungen der mechanisch schwingfähigen Einheit vernachlässigbar sind. Dabei wird die Dichte im Wesentlichen nach der Formel

$$\rho_{Med} = \frac{1}{S}\left[\left(\frac{F_{0,Vak} + C \cdot t + A \cdot t^2}{F_{t,p,Med}}\right) \cdot (1 + D \cdot p) - 1\right]$$

Bestimmt, wobei K die Dichteempfindlichkeit der mechanisch schwingfähigen Einheit ist, $F_{0,vak}$ die Frequenz der mechanischen Schwingungen im Vakuum, C und A den linearen, bzw. quadratischen Temperaturkoeffizienten der mechanisch schwingfähigen Einheit, t die Prozesstemperatur, $F_{T,P,med}$ die Frequenz der mechanischen Schwingungen im Medium, D den Druckkoeffizienten, und p der Druck des Mediums.

Um unabhängig von empirischen Annahmen zu sein, ist aus der DE102015102834A1 ein analytisches Messprinzip zur Bestimmung der Dichte und/oder Viskosität mittels eines vibronischen Sensor bekannt geworden, die Interaktionen zwischen der schwingfähigen Einheit und dem Medium anhand eines mathematischen Modells berücksichtigt. Der Sensor wird bei zwei verschiedenen vorgebbaren Phasenverschiebungen betrieben und aus dem jeweiligen Antwortsignal die Prozessgrößen Dichte und/oder Viskosität ermittelt.

Unabhängig davon, welche Prozessgröße mittels eines vibronischen Sensors bestimmt und/oder überwacht wird, können verschiedene Störeinflüsse die Messgenauigkeit des jeweiligen Sensors negativ beeinflussen. Problematisch sind insbesondere sogenannte Fremdvibrationen, welche beispielsweise durch Pumpen und/oder Ultraschallbäder am Einsatzort des Sensors verursacht werden können. In dieser Hinsicht ist aus der Offenlegungsschrift DE102012101667A1 ein vibronischer Sensor bekannt geworden, bei welchem eine Regel-/Auswerteeinheit dazu konfiguriert

ist, bei Vorliegen mindestens einer Fremdvibration in Abhängigkeit der Frequenz und/oder der Amplitude der Fremdvibration die Schwingungsanregung derart zu steuern, dass das Empfangssignal von der Fremdvibration im Wesentlich ungestört ist, und/oder mindestens eine Frequenz einer Fremdvibration in dem Empfangssignal zu unterdrücken. Hierzu ist aber im Prinzip Kenntnis über die jeweils auftretenden Fremdvibrationen erforderlich.

Die EP 3 056 877 A1 betrifft eine Vibrationsmessanordnung mit Kompensation von Störschwingungen.

Die DE 101 31 081 A1 beschreibt einen vibronischen Sensor, bei dem Störeinflüsse anhand des Abklingverhaltens einer schwingfähigen Einheit in Reaktion auf ein Anregesignal entdeckt werden, oder Fremdvibrationen vermutet werden, wenn während der Anregung Störschwingungen in einem Frequenzbereich auftreten, der nicht angeregt wird.

Ausgehend vom Stand der Technik liegt der vorliegenden Erfindung die Aufgabe zugrunde, eine möglichst zuverlässige Bestimmung und/oder Überwachung einer Prozessgröße eines Mediums mittels eines vibronischen Sensors auf einfache Weise zu gewährleisten.

Diese Aufgabe wird gelöst durch das Verfahren nach Anspruch 1 sowie durch die Vorrichtung, welche zur Durchführung eines erfindungsgemäßen Verfahrens ausgestaltet ist, nach Anspruch 13. Bei dem Verfahren handelt es sich um ein Verfahren zur Bestimmung und/oder Überwachung zumindest einer Prozessgröße eines Mediums mittels eines vibronischen Sensors. Erfindungsgemäß wird in einem ersten Betriebsmodus eine mechanisch schwingfähige Einheit mittels eines ersten elektrischen Anregesignals zu mechanischen Schwingungen angeregt, und die mechanischen Schwingungen der mechanisch schwingfähigen Einheit empfangen und in ein erstes elektrisches Empfangssignal mit zumindest einer ersten Frequenz umgewandelt.

Ferner wird das erste Empfangssignal in Bezug auf die zumindest eine Prozessgröße ausgewertet. Des Weiteren werden in einem zweiten Betriebsmodus, in dem kein Anregesignal zur Beaufschlagung der schwingfähigen Einheit erzeugt wird, mechanische Schwingungen der schwingfähigen Einheit, die durch einen Störeinfluss verursacht werden, empfangen und in ein zweites elektrisches Empfangssignal umgewandelt, wobei zumindest eine zweite Frequenz des zweiten elektrischen Empfangssignals ermittelt wird, und wobei die zumindest eine zweite Frequenz zumindest einem ersten Störeinfluss für den vibronischen Sensor zugeordnet wird. Optional kann dann beispielsweise eine Meldung über das Vorliegen zumindest eines Störeinflusses, insbesondere der dem Störeinfluss zugeordneten Frequenz generiert und ausgegeben werden.

Erfindungsgemäß wird also während des zweiten Betriebsmodus kein zweites Anregesignal zur Beaufschlagung der schwingfähigen Einheit erzeugt. Vielmehr können Schwingungen der schwingfähigen Einheit, welche durch zumindest einen Störeinfluss verursacht werden, detektiert werden. In dieser Hinsicht sind solche Störeinflüsse von Bedeutung, welche zu einer Schwingung der schwingfähigen Einheit mit zumindest einer bestimmten Frequenz führen. Die durch den zumindest einen Störeinfluss hervorgerufenen Schwingungen der schwingfähigen Einheit leisten nämlich neben dem durch die erste Anregefrequenz verursachten, gewollten Schwingungen, ebenfalls einen Beitrag, insbesondere einen ungewollten Beitrag, zu dem ersten Empfangssignal.

Vorteilhaft muss zur Kompensation des zumindest einen Störeinflusses dieser nicht a priori bekannt sein. Vielmehr können gegebenenfalls vorhandene Störeinflüsse am Einsatzort des vibronischen Sensors direkt detektiert, berücksichtigt und ggf. kompensiert und/oder eliminiert werden. Unter Kompensation sei in diesem Zusammenhang beispielsweise eine rechnerische Kompensation des zumindest einen Störeinflusses verstanden. Der zumindest eine Störeinfluss, kann, sofern seine Ursache bekannt wird, aber auch am Einsatzort des vibronischen Sensors eliminiert werden. Die mittels des erfindungsgemäßen Verfahrens ermittelte zumindest eine zweite Frequenz des Störeinflusses kann dabei ggf. Aufschluss über mögliche Ursachen geben.

Der zweite Betriebsmodus kann dabei einerseits einmalig bei Inbetriebnahme am jeweiligen Einsatzort durchgeführt werden. Andererseits kann der zweite Betriebsmodus auch zu bestimmbaren Zeitpunkten wiederholt, insbesondere in bestimmbaren Zeitintervallen zyklisch wiederholt, ausgeführt werden.

In einer Ausgestaltung des Verfahrens wird anhand eines Vergleichs zumindest des ersten und des zweiten Empfangssignals, insbesondere der ersten Frequenz und der zweiten Frequenz, eine Zustandsüberwachung durchgeführt. Hierbei handelt es sich insbesondere um eine Aussage über das Schwingungsverhalten des vibronischen Sensors.

Es ist von Vorteil, wenn anhand des Vergleichs erkannt wird, ob das erste Empfangssignal durch den Störeinfluss beeinflusst ist. In diesem Falle sind die mechanischen Schwingungen durch das Vorhandensein eines Störeinflusses beeinflusst. Das erste Empfangssignal weist sowohl einen durch das erste Anregesignal hervorgerufenen Anteil, als auch einen durch den zumindest einen Störeinfluss hervorgerufenen Anteil auf. Anhand eines Vergleichs des ersten und zweiten Empfangssignals kann unter anderem auf das Ausmaß der Beeinflussung durch den zumindest einen Störeinfluss geschlossen werden. Beispielsweise spielt der Frequenzabstand zwischen der zumindest einen ersten Frequenz des ersten Empfangssignals, welches die Schwingungen der schwingfähigen Einheit repräsentiert, und der zumindest einen zweiten Frequenz, welche den zumindest einen Störeinfluss repräsentiert, eine wichtige Rolle. Stimmen die Werte für die erste und die zweite Frequenz im Wesentlichen überein, kann darauf geschlossen werden, dass die Schwingungen der schwingfähigen Einheit maßgeblich durch den zumindest einen Störeinfluss hervorgerufen werden. Im schlimmsten Falle schwingt die schwingfähige Einheit nicht entsprechend des elektrischen ersten Anregesignals, sondern entsprechend des zumindest eines Störeinflusses. In diesem Extremfall ist eine zuverlässige Bestimmung und/oder Überwachung der zumindest einen Prozessgröße nicht mehr möglich.

In einer Ausgestaltung des erfindungsgemäßen Verfahrens wird die schwingfähige Einheit im ersten Betriebsmodus zu mechanischen Schwingungen mit einer Resonanzfrequenz angeregt.

Ferner wird in einer Ausgestaltung des Verfahrens während des ersten Betriebsmodus das erste Anregesignal ausgehend vom ersten Empfangssignal derart erzeugt, dass zumindest eine vorgebbare Phasenverschiebung zwischen dem ersten Anregesignal und dem ersten Empfangssignal vorliegt. Eine Phasenverschiebung von +/- 90° entspricht beispielsweise Resonanzschwingungen der schwingfähigen Einheit, während eine Phasenverschiebung von +/-45° in vielen Fällen zur Bestimmung der Dichte und/oder Viskosität eines Mediums mittels eines vibronischen Sensors eingestellt wird.

Vorteilhaft handelt es sich bei dem zumindest einen ersten Störeinfluss um eine, insbesondere mechanische oder elektrische Schwingung. Mechanische Schwingungen werden in diesem Zusammenhang häufig auch als Fremdvibrationen bezeichnet. Solche Fremdvibrationen können beispielsweise durch am Einsatzort des vibronischen Sensors ebenfalls installierte Pumpen oder Motoren verursacht werden. Weiterhin kann es sich um Vibrationen handeln, die durch eine Strömung eines Mediums hervorgerufen werden. Aber auch Ultraschallbäder führen leicht zu Fremdvibrationen, welche das Schwingungsverhalten einer schwingfähigen Einheit eines vibronischen Sensors beeinflussen. Diese Liste ist keineswegs abschließend. Vielmehr sind zahlreiche mögliche Ursachen für das Auftreten ungewollte mechanischer und/oder elektrischer Schwingungen möglich, welche alle unter die vorliegende Erfindung fallen.

Eine bevorzugte Ausgestaltung des Verfahrens sieht vor, dass in einem dritten Betriebsmodus ein drittes elektrisches Anregesignal erzeugt wird, wobei die schwingfähige Einheit mittels des dritten Anregesignals angeregt wird, wobei von der schwingfähigen Einheit ein drittes elektrisches Empfangssignal mit zumindest einer dritten Frequenz empfangen wird. Das dritte Empfangssignal setzt sich also im Falle des Vorhandenseins eines Störeinflusses ebenso wie das erste Empfangssignal aus einem durch das Anregesignal und einem durch den Störeinfluss hervorgerufenen Anteil zusammen.

Es ist von Vorteil, wenn es sich bei dem ersten und/oder dritten Anregesignal um ein Signal variabler Frequenz handelt. Beispielsweise kann die Beaufschlagung der schwingfähigen Einheit gemäß dieser Ausgestaltung anhand eines sogenannten Frequenz-Sweeps, oder auch Frequenzsuchlaufs, vorgenommen werden, bei welchem diskrete Frequenzen aus einem vorgebbaren Frequenzbereich nacheinander durchgefahren werden. Die Durchführung solcher Frequenz-Sweeps ist im Kontext vibronischer Sensoren unter anderem in Zusammenhang mit der Einstellung der vorgebbaren Phasenverschiebung zwischen einem Anregesignal und Empfangssignal bekannt geworden und beispielsweise in den Dokumenten DE102009026685A1, DE102009028022A1, und DE102010030982A1 beschrieben.

Der Frequenzbereich für das erste und/oder dritte Anregesignal beinhaltet bevorzugt zumindest einen Arbeitsbereich für eine Schwingungsfrequenz der schwingfähigen Einheit. Soll der Frequenzbereich auf diesen Arbeitsbereich beschränkt werden, bietet sich als oberer Grenzwert für den Frequenzbereich beispielweise eine Resonanzfrequenz der schwingfähigen Einheit im Vakuum an. Als unterer Grenzwert kann wiederum die Resonanzfrequenz einer schwingfähigen Einheit bei einer vorgegebenen Eintauchtiefe der schwingfähigen Einheit in ein Medium mit einer maximal anzunehmenden Dichte für den Anwendungsbereich des vibronischen Sensors verwendet werden. Insbesondere durch Störeinflüsse hervorgerufene Frequenzen innerhalb des Frequenz-Arbeitsbereichs des vibronischen Sensors können für eine zuverlässige Bestimmung der jeweiligen Prozessgröße problematisch sein.

Es ist ferner von Vorteil, wenn anhand des ersten, zweiten und/oder dritten Empfangssignals ein erstes, zweites und/oder drittes Frequenzspektrum des vibronischen Sensors erzeugt wird. Anhand eines Frequenzspektrums können die jeweils relevanten Frequenzen auf einfache und schnelle Art und Weise ermittelt werden. Das zweite Frequenzspektrum beinhaltet nicht die der Schwingungen der schwingfähigen Einheit entsprechenden Frequenzen. Anhand diesen Spektrums kann beispielsweise ermittelt werden, welche durch jeweils zumindest einen Störeinfluss verursachten Frequenzen jeweils einen Beitrag zum jeweiligen Empfangssignal leisten.

In einer besonders bevorzugten Ausgestaltung des Verfahrens wird/werden der zweite und/oder dritte Betriebsmodus zumindest zu einem ersten und einem zweiten Zeitpunkt durchgeführt, wobei anhand eines Vergleichs des zweiten und/oder dritten Empfangssignals zu dem ersten und zweiten Zeitpunkt auf einen Defekt zumindest einer Komponente an oder in einer Messstelle, an oder in welcher der vibronische Sensor eingesetzt wird oder auf eine geänderte Prozessbedingung geschlossen wird. Beispielsweise kann die Intensität einer Frequenz als Funktion der Zeit ermittelt werden.

Nimmt die Intensität einer charakteristischen Frequenz - das ist zumindest eine zweite Frequenz, welche durch zumindest einen Störeinfluss verursacht wird - beispielsweise mit der Zeit, insbesondere signifikant zu, so bedeutet dies, dass auch der jeweils zugehörige Störeinfluss mit der Zeit zunimmt. Es kann sich in diesem Falle beispielsweise um einen Defekt an einem Motor oder an einer Pumpe handeln.

Alternativ kann auf neue, bzw. erst im Verlauf des Einsatzes des vibronischen Sensors an dessen Einsatzort auftretende Störeinflüsse geschlossen werden, wenn beispielsweise im zweiten und/oder dritten Empfangssignal neue charakteristische Frequenzen auftreten.

Eine weitere besonders bevorzugte Ausgestaltung des Verfahrens beinhaltet, dass anhand des zweiten und/oder dritten Empfangssignals, insbesondere anhand der zweiten und/oder dritten Frequenz oder anhand des zweiten und/oder dritten Frequenzspektrums, ein angepasstes erstes Empfangssignal, insbesondere zumindest eine angepasste erste Frequenz oder ein angepasstes erstes Frequenzspektrum erzeugt wird, und wobei die zumindest eine Prozessgröße anhand des ersten angepassten Empfangssignals bestimmt und/oder überwacht wird. Der Anteil am ersten Empfangssignal, welcher durch den zumindest einen ersten Störeinfluss hervorgerufen wird, wird also zur Bestimmung und/oder Überwachung der zumindest einen Prozessgröße geeignet kompensiert. Beispielsweise können ein erstes und ein zweites bzw. drittes Frequenzspektrum voneinander subtrahiert werden.

Es ist von Vorteil, wenn es sich bei der Prozessgröße um einen vorgegebenen Füllstand des Mediums in einem Behälter, um die Dichte des Mediums und/oder um die Viskosität des Mediums handelt.

Die erfindungsgemäße Aufgabe wird ferner gelöst durch eine Vorrichtung zur Bestimmung und/oder Überwachung zumindest einer Prozessgröße eines Mediums in einem Behälter umfassend eine Elektronikeinheit und eine mechanisch schwingfähige Einheit, wobei die Elektronikeinheit dazu ausgestaltet ist, zumindest ein erfindungsgemäßes Verfahren auszuführen.

Bezüglich der Vorrichtung ist es von Vorteil, wenn die Elektronikeinheit zumindest ein Schaltelement zum Hin- und Herschalten zwischen dem ersten und zweiten Betriebsmodus, oder zumindest zwei Schaltelemente zum Hin- und Herschalten zwischen dem ersten, zweiten und/oder dritten Betriebsmodus aufweist.

Ebenso ist es von Vorteil, wenn die mechanisch schwingfähige Einheit eine Schwinggabel, ein Einstab, oder eine Membran ist.

Es sei darauf verwiesen, dass die im Zusammenhang mit dem erfindungsgemäßen Verfahren genannten Ausführungsformen mutatis mutandis auch für die erfindungsgemäße Vorrichtung anwendbar sind und umgekehrt.

Die Erfindung sowie vorteilhafte Ausgestaltungen werden nachfolgend anhand der Figuren Fig. 1 - Fig. 4 näher beschrieben. Es zeigt:

Fig. 1: eine schematische Skizze eines vibronischen Sensors gemäß Stand der Technik,

Fig. 2: eine schematische Zeichnung einer schwingfähigen Einheit in Form einer Schwinggabel,

Fig. 3 eine erste zur Durchführung eines erfindungsgemäßen Verfahrens geeignete Elektronikeinheit eines vibronischen Sensors, und

Fig. 4 eine zweite zur Durchführung eines erfindungsgemäßen Verfahrens geeignete Elektronikeinheit eines vibronischen Sensors

Gleiche Elemente sind in den Figuren mit gleichen Bezugszeichen versehen.

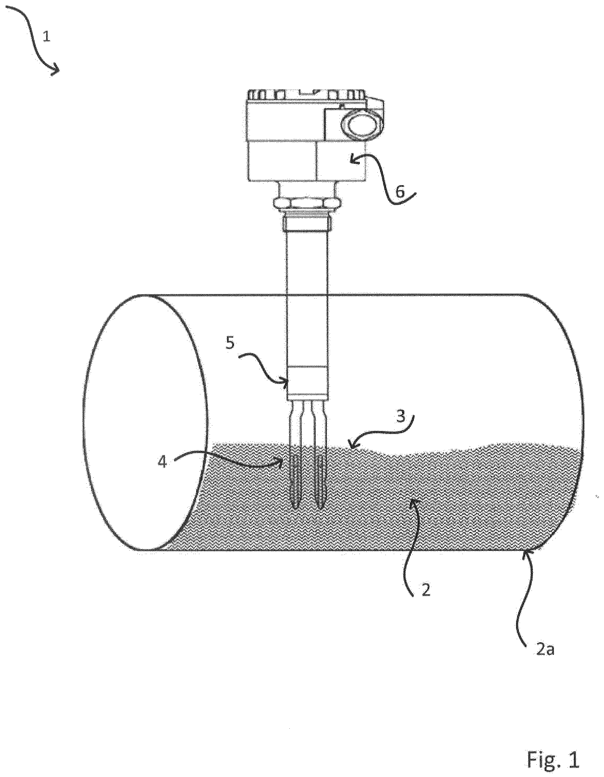

In Fig. 1 ist ein vibronischer Sensor 1 mit einer Sensoreinheit 3 umfassend eine schwingfähige Einheit 4 in Form einer Schwinggabel gezeigt, welche teilweise in ein Medium 2 eintaucht, welches sich in einem Behälter 2a befindet. Die schwingfähige Einheit wird mittels der Anrege-/Empfangseinheit 5 zu mechanischen Schwingungen angeregt, und kann beispielsweise ein piezoelektrischer Stapel- oder Bimorphantrieb sein. Es versteht sich jedoch von selbst, dass auch andere Ausgestaltungen eines vibronischen Sensors unter die Erfindung fallen. Weiterhin ist eine Elektronikeinheit 6 dargestellt, mittels welcher die Signalerfassung, -auswertung und/oder -speisung erfolgt.

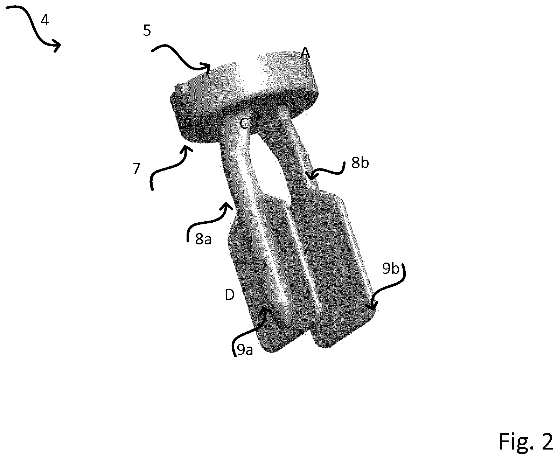

In Fig. 2 ist eine schwingfähige Einheit 4 in Form einer Schwinggabel, wie sie beispielsweise im von der Anmelderin unter dem Namen LIQUIPHANT vertriebenen vibronischen Sensor 1 integriert wird, in einer Seitenansicht gezeigt. Die Schwinggabel 4 umfasst zwei an eine Membran 7 angeformte Schwingstäbe 8a,8b, an welche endseitig zwei Paddel 9a,9b angeformt sind. Die Schwingstäbe 8a,8b zusammen mit den Paddeln 9a,9b werden häufig auch als Gabelzinken bezeichnet. Um die mechanisch schwingfähige Einheit 4 in mechanische Schwingungen zu versetzen, wird mittels einer auf der den Schwingstäben 8a,8b abgewandten Seite der Membran 7 stoffschlüssig angebrachten Antriebs-/Empfangseinheit 5 eine Kraft auf die Membran 7 aufgeprägt. Die Antriebs-/Empfangseinheit 5 ist eine elektromechanische Wandlereinheit, und umfasst beispielsweise ein piezoelektrisches Element, oder auch einen elektromagnetischen Antrieb [nicht gezeigt]. Entweder sind die Antriebseinheit 5 und die Empfangseinheit als zwei separate Einheiten aufgebaut, oder als kombinierte Antriebs-/Empfangseinheit. Im Falle, dass die Antriebs-/Empfangseinheit 5 ein piezoelektrisches Element umfasst, wird die der Membran 7 aufgeprägte Kraft über das Anlegen eines Anregesignals $U_A$, beispielsweise in Form einer elektrischen Wechselspannung, generiert. Eine Änderung der angelegten elektrischen Spannung bewirkt eine Änderung der geometrischen Form der Antriebs-/Empfangseinheit 5, also eine Kontraktion bzw. eine Relaxation innerhalb des piezoelektrischen Elements derart, dass das Anlegen einer elektrischen Wechselspannung als Anregesignal $U_A$ zu einer Schwingung der stoffschlüssig mit der Antriebs-/Empfangseinheit 5 verbundenen Membran 7 hervorruft. Umgekehrt werden die mechanischen Schwingungen der schwingfähigen Einheit über die Membran an die Antriebs-/Empfangseinheit 5 übertragen und in ein elektrisches Empfangssignal $U_e$ umgewandelt. Die Frequenz des Empfangssignals $U_e$ entspricht dabei der mechanischen Schwingungsfrequenz f der schwingfähigen Einheit 4.

Im Falle, dass zumindest ein Störeinfluss, beispielsweise in Form einer auftretenden mechanischen Fremdvibration, am Einsatzort des vibronischen Sensors auftritt, leistet auch der Störeinfluss einen Beitrag zum Empfangssignal. Aufgrund dieses zusätzlichen, insbesondere ungewollten Beitrags, kann es zu Ungenauigkeiten bei der Bestimmung und/oder Überwachung der zumindest einen Prozessgröße kommen. Im schlimmsten Fall ist eine zuverlässige Bestimmung und/oder Überwachung überhaupt nicht mehr möglich.

Mittels des erfindungsgemäßen Verfahrens bzw. mittels einer erfindungsgemäßen vibronischen Sensors 1 lassen sich vorteilhaft Störeinflüsse detektieren, berücksichtigen, kompensieren und/oder elimineieren. Hierfür muss der jeweilige Störeinfluss nicht a priori bekannt sein. Vielmehr kann mittels der vorliegenden Erfindung zumindest eine dem jeweiligen Störeinfluss zuzuordnende zweite Frequenz detektiert werden. Für die nachfolgende Beschreibung wird ohne Beschränkung der Allgemeinheit der Einfachheit halber davon ausgegangen, dass es sich bei dem Störeinfluss um eine mechanische Schwingung, insbesondere um eine Fremdvibration handelt. Für andere Arten von Störeinflüssen, beispielsweise elektrische Schwingungen, gelten analoge Überlegungen, sodass auf diese weiteren Fälle nicht weiter detailliert eingegangen wird.

Mechanische Fremdvibrationen am Einsatzort des jeweiligen vibronischen Sensors können unterschiedlichste Ursachen haben. Beispielsweise kann es sich um einen, insbesondere schadhaften, Motor, eine Pumpe, ein Ultraschallbad oder ähnliches handeln. Aber auch ein strömendes Medium kann eine Fremdvibration hervorrufen. Da das vibronische Messprinzip grundsätzlich auf der Ausführung mechanischer Schwingungen einer schwingfähigen Einheit basiert, und weil Änderungen im Schwingungsverhalten der schwingfähigen Einheit zur Bestimmung und/oder Überwachung der jeweiligen Prozessgröße herangezogen werden, hängt die erreichbare Messgenauigkeit empfindlich vom Vorhandensein von Fremdvibrationen, bzw. von deren genauer Kenntnis, ab.

Setzt sich eine Schwingung der schwingfähigen Einheit aus einem durch das jeweilige Anregesignal hervorgerufenen Signalanteil, sowie durch einen durch einen Störeinfluss hervorgerufenen Signalanteil zusammen, so beeinflusst der jeweils vorhandene Störeinfluss die Bestimmung und/oder Überwachung der Prozessgröße anhand des von der schwingfähigen Einheit empfangenen Empfangssignals maßgeblich, da sich das Empfangssignal ebenfalls aus einem die Schwingungen der schwingfähigen Einheit repräsentierenden Signalanteil und einen den zumindest einen Störeinfluss repräsentierenden Signalanteil zusammensetzt. Je nach Intensität und Frequenz des jeweiligen Störeinflusses kann es sogar dazu kommen, dass eine Bestimmung der jeweiligen Prozessgröße, überhaupt nicht mehr zuverlässig möglich ist. Eine besonders hohe Relevanz kommt ferner dem Fall zu, dass die Frequenz eines Störeinflusses im fortlaufenden Messbetrieb des vibronischen Sensors nicht bekannt ist. Ist die jeweilige Prozessgröße durch einen vorgebbaren Füllstand gegeben, kann es in diesem Falle dazu kommen, dass das Erreichen des vorgebbaren Füllstands detektiert wird, obwohl dieser noch nicht erreicht wurde, oder umgekehrt. Beispielsweise kann aufgrund so einer Fehlfunktion ein fälschliches Schaltsignal zum Schalten eines Prozess-Schaltelements generiert werden.

Mit der vorliegenden Erfindung ist es nun vorteilhaft möglich, ggf. vorhandene Störeinflüsse zu detektieren. Diese können dann zur Bestimmung und/oder Überwachung der jeweiligen Prozessgröße beispielsweise berücksichtigt, kompensiert oder auch eliminiert werden.

Das erfindungsgemäße Verfahren kann sowohl für vibronische Sensoren mit analogen also auch für solche mit digitalen Elektronikeinheiten eingesetzt werden, wie anhand der nachfolgend beschriebenen Ausgestaltungen erläutert werden wird.

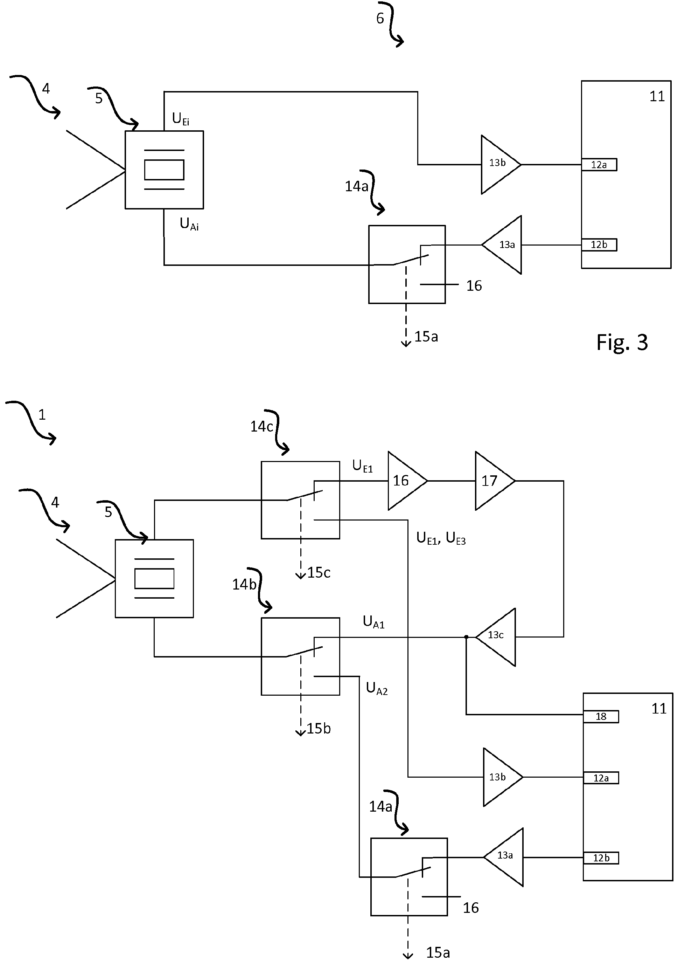

Eine erste beispielhafte Ausgestaltung der vorliegenden Erfindungen ist in Fig. 3 gezeigt und betrifft den Fall einer digitalen Elektronikeinheit 6 umfassend zumindest eine Recheneinheit 11, hier in Form eines Microcontrollers. Mittels des Microcontrollers wird ein erstes Anregesignal $U_{A1}$ erzeugt, mittels welchem die schwingfähige Einheit 4 zu mechanischen Schwingungen angeregt wird. Die Schwingungen der schwingfähigen Einheit 4 wiederum werden mittels der Antriebs-/Empfangseinheit in ein erstes elektrisches Empfangssignal $U_{E1}$ gewandelt und dem Microcontroller 11 zugeführt. Anhand des ersten Empfangssignals $U_{E1}$ erfolgt die Bestimmung und/oder Überwachung der jeweiligen Prozessgröße, beispielsweise eines vorgegebenen Füllstands, der Dichte und/oder der Viskosität des jeweiligen Mediums 2.

In der hier gezeigten Ausgestaltung, jedoch nicht zwingend, enthält der Signalpfad der Elektronikeinheit einen Digital-Analog-Wandler (DAC) 12b, einen Analog-Digital-Wandler (ADC) 12a sowie zwei Verstärkereinheiten 13a, 13b.

Das Schaltelement 14a dient dazu, zwischen dem ersten und dem zweiten Betriebsmodus hin- und her zu schalten. Das Schaltelement wird anhand eines Steuersignals 15a durch den Microcontroller 11 gesteuert. In der in Fig. 3 gezeigten Konfiguration des Schaltelements 14a befindet sich der vibronische Sensor im ersten Betriebsmodus, welche einem normalen Messbetrieb entspricht. Für den normalen Messbetrieb sind dabei im Prinzip alle aus dem Stand der Technik bekannten Messverfahren, insbesondere die beispielhaft in der Beschreibungseinleitung genannten, denkbar und fallen unter die vorliegende Erfindung.

Um in den zweiten Betriebsmodus zu wechseln, wird das Schaltelement 14a in seine zweite Konfiguration gebracht. Ein Ausgang 16 des Schaltelements 14a bleibt in dieser Konfiguration offen, so dass die Sensoreinheit 14a vom regulären Messpfad (erster Betriebsmodus) abgehängt wird. Während des zweiten Betriebsmodus wird also kein zweites Anregesignal $U_{A2}$ erzeugt. Vielmehr wird lediglich ein zweites Empfangssignal $U_{E2}$ von der mechanisch schwingfähigen Einheit 4 empfangen und hinsichtlich zumindest einer zweiten Frequenz $f_2$ ausgewertet, welche zweite Frequenz $f_2$ zumindest dem zumindest einen Störeinfluss entspricht.

Je nach Ausgestaltung des erfindungsgemäßen Verfahrens kann der jeweilige Sensor entweder ausschließlich im ersten und zweiten Betriebsmodus betrieben werden. Es ist jedoch ebenfalls die Durchführung eines dritten Betriebsmodus möglich, in welchem der vibronische Sensor 1 mit einem dritten Anregesignal $U_{A3}$ beaufschlagt wird und in welchem ein drittes Empfangssignal $U_{E3}$ empfangen wird. Der dritte Betriebsmodus kann einerseits durch zumindest ein zweites Schaltelement 14b (hier nicht gezeigt) ausgelöst werden. Alternativ kann auch das erste Schaltelement 14a in seine erste Konfiguration zurückgesetzt werden. In letzterem Fall wird dann innerhalb des Microcontrollers 11 zwischen dem ersten und dritten Betriebsmodus unterschieden.

Der Einfacheinheit halber sind die jeweiligen Anregesignale $U_{A1}$-$U_{A3}$ und Empfangssignale $U_{E1}$-$U_{E3}$ nicht separat eingezeichnet, sondern einmalig in Form eins Bezugszeichens $U_{Ai}$ und $U_{Ei}$ vermerkt, wobei i eine Zahl zwischen eins und drei ist.

Eine zweite Ausgestaltung ist anhand des Blockschaltbildes in Fig. 4 dargestellt. Diese Ausgestaltung eignet sich insbesondere für einen vibronischen Sensor 1 mit einer zumindest teilweise analogen Elektronikeinheit 6. Zur Erzeugung des ersten Anregesignals $U_{A1}$ ausgehend vom ersten Empfangssignal $U_{E1}$ und zur Einstellung der vorgebbaren Phasenverschiebung $\Delta\Phi$ zwischen dem ersten Anregesignal $U_{A1}$ und dem ersten Empfangssignal $U_{E1}$ im ersten Betriebsmodus umfasst die Elektronikeinheit einen Bandpassfilter 16 und einen Phasenschieber 17.

Die Schaltelemente 14a-14c dienen dem Hin- und Herschalten zwischen dem ersten und zweiten bzw. ersten, zweiten und dritten Betriebsmodus. Die Schaltelemente 14a-14c werden dabei analog zur Ausgestaltung gemäß Fig. 3 mittels einer Steuerleitung 15a-15c über den Microcontroller 11 gesteuert. Im zweiten und/oder dritten Betriebsmodus wird kein und/oder das dritte Anregesignal $U_{A3}$ mittels des Microcontrollers erzeugt und das jeweilige zweite $U_{E2}$ und/oder dritte $U_{E3}$ Empfangssignal mittels des Microcontrollers zumindest bezüglich der zumindest einen zweiten $f_2$ und/oder dritten $f_3$ Frequenz ausgewertet. Mittels des Timers 18 kann der Microcontoller 11 ferner die zumindest eine erste Frequenz $f_1$ des ersten Empfangssignals $U_{E1}$ bestimmen und die jeweilige Prozessgröße bestimmen und/oder überwachen.

Unabhängig von der genauen Ausgestaltung der Elektronikeinheit 6 des vibronischen Sensors können entweder die zumindest eine erste, zweite und/oder dritte Frequenz miteinander verglichen werden, oder es kann ein erstes, zweites und/oder drittes Frequenzspektrum erzeugt werden.

**Bezugszeichenliste**

| | |
|---|---|
| 1 | Vibronischer Sensor |
| 2 | Medium |
| 2a | Behälter |
| 3 | Sensoreinheit |
| 4 | Schwingfähige Einheit |
| 5 | Elektromechanische Wandlereinheit |
| 6 | Elektronikeinheit |
| 7 | Membran |
| 8a,8b | Schwingstäbe |
| 9a,9b | Paddel |

| | |
|---|---|
| 11 | Recheneinheit, Microcontroller |
| 12a, 12b | ADC, DAC |
| 13a-13c | Verstärker |
| 14a-14c | Schaltelemente |
| 15a-15c | Steuerleitungen |
| 16 | Bandpassfilter |
| 17 | Phasenschieber |

| | |
|---|---|
| $U_{A1}$ -$U_{A3}$ | erstes, zweites, drittes Anregesignal |
| $U_{E1}$ -$U_{E3}$ | erstes, zweites, drittes Empfangssignal |
| $f_1$-$f_3$ | erste, zweite, dritte Frequenz |
| $\Delta\Phi$ | vorgebbare Phasenverschiebung |

**Patentansprüche**

1. Verfahren zur Bestimmung und/oder Überwachung zumindest einer Prozessgröße eines Mediums (2) mittels eines vibronischen Sensors (1),

   wobei in einem ersten Betriebsmodus

   - eine schwingfähige Einheit (4) mittels eines ersten elektrischen Anregesignals ($U_{A1}$) zu mechanischen Schwingungen angeregt wird, und die mechanischen Schwingungen der mechanisch schwingfähigen Einheit (4) empfangen und in ein erstes elektrisches Empfangssignal ($U_{E1}$) mit zumindest einer ersten Frequenz ($f_1$) umgewandelt werden, und
   - das erste Empfangssignal ($U_{E1}$) in Bezug auf die zumindest eine Prozessgröße ausgewertet wird, und

   wobei in einem zweiten Betriebsmodus

   - kein zweites Anregesignal zur Beaufschlagung der schwingfähigen Einheit (4) erzeugt wird,
   - mechanische Schwingungen der schwingfähigen Einheit (4), welche durch zumindest einen ersten Störeinfluss verursacht werden, empfangen und in ein zweites elektrisches Empfangssignal ($U_{E2}$) umgewandelt werden,
   - wobei zumindest eine zweite Frequenz ($f_2$) des zweiten elektrischen Empfangssignals ($U_{E2}$) ermittelt wird, und
   - wobei die zumindest eine zweite Frequenz dem zumindest einen ersten Störeinfluss für den vibronischen Sensor (1) zugeordnet wird.

2. Verfahren nach Anspruch 1,
   wobei anhand eines Vergleichs zumindest des ersten ($U_{E1}$) und des zweiten ($U_{E2}$) Empfangssignals, insbesondere der ersten Frequenz ($f_1$) und der zweiten ($f_2$) Frequenz, eine Zustandsüberwachung durchgeführt wird.

**3.** Verfahren nach Anspruch 2,
wobei anhand des Vergleichs erkannt wird, ob das erste Empfangssignal ($U_{E1}$) durch den Störeinfluss beeinflusst ist.

**4.** Verfahren nach Anspruch 1 oder 2,
wobei die schwingfähige Einheit (4) im ersten Betriebsmodus zu mechanischen Schwingungen mit einer Resonanzfrequenz angeregt wird.

**5.** Verfahren nach Anspruch 1,
wobei während des ersten Betriebsmodus das erste Anregesignal ($U_{A1}$) ausgehend vom ersten Empfangssignal ($U_{E1}$) derart erzeugt wird, dass zumindest eine vorgebbare Phasenverschiebung ($\Delta\Phi$) zwischen dem ersten Anregesignal ($U_{A1}$) und dem ersten Empfangssignal ($U_{E1}$) vorliegt.

**6.** Verfahren nach zumindest einem der vorhergehenden Ansprüche,
wobei es sich bei dem zumindest einen ersten Störeinfluss um eine, insbesondere mechanische oder elektrische Schwingung handelt.

**7.** Verfahren nach zumindest einem der vorhergehenden Ansprüche,
wobei in einem dritten Betriebsmodus ein drittes elektrisches Anregesignal ($U_{A3}$) erzeugt wird, wobei die schwingfähige Einheit (4) mittels des dritten Anregesignals ($U_{A3}$) angeregt wird, wobei von der schwingfähigen Einheit (4) ein drittes elektrisches Empfangssignal ($U_{E3}$) mit zumindest einer dritten Frequenz ($f_3$) empfangen wird.

**8.** Verfahren nach zumindest einem der vorhergehenden Ansprüche,
wobei es sich bei dem ersten ($U_{A1}$) und/oder dritten Anregesignal ($U_{A3}$) um ein Signal variabler Frequenz handelt.

**9.** Verfahren nach zumindest einem der vorhergehenden Ansprüche,
wobei anhand des ersten ($U_{E1}$), zweiten ($U_{E2}$) und/oder dritten ($U_{E3}$) Empfangssignals ein erstes, zweites und/oder drittes Frequenzspektrum des vibronischen Sensors (1) erzeugt wird.

**10.** Verfahren nach Anspruch 8,
wobei der zweite und/oder dritte Betriebsmodus zumindest zu einem ersten und einem zweiten Zeitpunkt durchgeführt wird/werden, und wobei anhand eines Vergleichs des zweiten ($U_{E2}$) und/oder dritten ($U_{E3}$) Empfangssignals zu dem ersten und zweiten Zeitpunkt auf einen Defekt zumindest einer Komponente an oder in einer Messstelle, an oder in welcher der vibronische Sensor (1) eingesetzt wird oder auf eine geänderte Prozessbedingung geschlossen wird.

**11.** Verfahren nach zumindest einem der vorhergehenden Ansprüche,
wobei anhand des zweiten ($U_{E2}$) und/oder dritten ($U_{E3}$) Empfangssignals, insbesondere anhand der zweiten ($f_2$) und/oder dritten ($f_3$) Frequenz oder anhand des zweiten und/oder dritten Frequenzspektrums, ein angepasstes erstes Empfangssignal ($U_{E1}'$), insbesondere zumindest eine angepasste erste Frequenz ($f_1'$) oder ein angepasstes erstes Frequenzspektrum erzeugt wird, und wobei die zumindest eine Prozessgröße anhand des ersten angepassten Empfangssignals ($U_{E1}'$) bestimmt und/oder überwacht wird .

**12.** Verfahren nach zumindest einem der vorhergehenden Ansprüche,
wobei es sich bei der Prozessgröße um einen vorgegebenen Füllstand des Mediums (2) in einem Behälter (2a), um die Dichte des Mediums (2) und/oder um die Viskosität des Mediums (2) handelt.

**13.** Vorrichtung zur Bestimmung und/oder Überwachung zumindest einer Prozessgröße eines Mediums (2) in einem Behälter (2a) umfassend eine Elektronikeinheit (6) und eine mechanisch schwingfähige Einheit (4),
wobei die Elektronikeinheit (6) dazu eingerichtet ist, ein Verfahren gemäß einem der vorhergehenden Ansprüche auszuführen.

**14.** Vorrichtung nach Anspruch 13,
wobei die Elektronikeinheit (6) zumindest ein Schaltelement (14a) zum Hin- und Herschalten zwischen dem ersten und zweiten Betriebsmodus, oder zumindest zwei Schaltelemente (14a-14c) zum Hin- und Herschalten zwischen dem ersten, zweiten und/oder dritten Betriebsmodus aufweist.

**15.** Vorrichtung nach Anspruch 9 oder 10,
wobei die mechanisch schwingfähige Einheit (4) eine Schwinggabel, ein Einstab, oder eine Membran ist.

**Claims**

1. Procedure designed to determine and/or monitor at least a process variable of a medium (2) using a vibronic sensor (1),

   wherein, in a first operating mode

   - a unit capable of vibrating (4) is excited to perform mechanical vibrations by means of a first electrical excitation signal ($U_{A1}$), and the mechanical vibrations of the unit capable of vibrating mechanically (4) are received and converted to a first electrical reception signal ($U_{E1}$) with at least a first frequency ($f_1$), and
   - the first reception signal ($U_{E1}$) is evaluated with regard to the at least one process variable, and

   wherein, in a second operating mode

   - no second excitation signal is generated to be applied to the unit capable of vibrating (4),
   - mechanical vibrations of the unit capable of vibrating mechanically (4), which are caused by at least a first interference factor, are received and converted to a second electrical reception signal ($U_{E2}$),
   - wherein at least a second frequency ($f_2$) of the second electrical reception signal ($UE2$) is determined, and
   - wherein the at least one second frequency is assigned to the at least one first interference factor for the vibronic sensor (1).

2. Procedure as claimed in Claim 1, wherein condition monitoring can be performed by comparing at least the first ($U_{E1}$) and the second ($U_{E2}$) reception signal, particularly the first frequency ($f_1$) and the second ($f_2$) frequency.

3. Procedure as claimed in Claim 2, wherein on the basis of the comparison it is possible to detect whether the first reception signal ($U_{E1}$) is influenced by the interference factor.

4. Procedure as claimed in Claim 1 or 2, wherein, in the first operating mode, the unit capable of vibrating (4) is excited to produce mechanical vibrations at a resonance frequency.

5. Procedure as claimed in Claim 1, wherein, in the first operating mode and starting from the first reception signal ($U_{E1}$), the first excitation signal ($U_{A1}$) is generated in such a way that there is at least a predefinable phase shift ($\Delta\Phi$) between the first excitation signal ($U_{A1}$) and the first reception signal ($U_{E1}$).

6. Procedure as claimed in at least one of the previous claims, wherein the at least one first interference factor is a vibration, particularly s mechanical or electrical vibration.

7. Procedure as claimed in at least one of the previous claims, wherein, in a third operating mode, a third electrical excitation signal ($U_{A3}$) is generated, wherein the unit capable of vibrating (4) is excited by the third excitation signal ($U_{A3}$), wherein a third electrical reception signal ($U_{E3}$) with at least a third frequency ($f_3$) is received by the unit capable of vibrating (4).

8. Procedure as claimed in at least one of the previous claims, wherein the first ($U_{A1}$) and/or the third ($U_{A3}$) excitation signal is a signal with a variable frequency.

9. Procedure as claimed in at least one of the previous claims, wherein a first, a second and/or a third frequency spectrum of the vibronic sensor (1) is generated using the first ($U_{E1}$), the second ($U_{E2}$) and/or the third ($U_{E3}$) reception signal.

10. Procedure as claimed in Claim 8, wherein the second and/or the third operating mode is/are executed at least a first and a second time, and wherein, on the basis of a comparison of the second ($U_{E2}$) and/or the third ($U_{E3}$) reception signal at the first and second time, one concludes a defect at least of a component on or in a measuring point, on or in which the vibronic sensor (1) is used, or one concludes a modified process condition.

**11.** Procedure as claimed in at least one of the previous claims,
wherein, using the second ($U_{E2}$) and/or the third ($U_{E3}$) reception signal, particularly using the second ($f_2$) and/or the third ($f_3$) frequency or using the second and/or the third frequency spectrum, an adapted first reception signal ($U_{E1}'$), particularly at least an adapted first frequency ($f_1'$) or an adapted first frequency spectrum is generated, and wherein the at least one process variable is determined and/or monitored using the first adapted reception signal ($U_{E1}'$).

**12.** Procedure as claimed in at least one of the previous claims,
wherein the process variable is a predefined level of the medium (2) in a vessel (2a), the density of the medium (2) and/or the viscosity of the medium (2).

**13.** Apparatus for determining and/or monitoring at least one process variable of a medium (2) in a vessel (2a) comprising an electronic unit (6) and a unit capable of vibrating mechanically (4), wherein the electronic unit (6) is designed to execute a procedure as claimed in one of the previous claims.

**14.** Apparatus as claimed in Claim 13,
wherein the electronic unit (6) has at least a switching element (14a) to switch back and forth between the first and the second operating mode, or at least two switching elements (14a-14c) to switch back and forth between the first, the second and/or the third operating mode.

**15.** Apparatus as claimed in Claim 9 or 10,
wherein the unit capable of vibrating mechanically (4) is a tuning fork, a single rod or a membrane.


**Revendications**

**1.** Procédé destiné à la détermination et/ou à la surveillance d'au moins une grandeur de process d'un produit (2) au moyen d'un capteur vibronique (1),

procédé pour lequel, dans un premier mode de fonctionnement

- une unité apte à vibrer (4) est excitée en vibrations mécaniques au moyen d'un premier signal d'excitation électrique ($U_{A1}$), et les vibrations mécaniques de l'unité apte à vibrer mécaniquement (4) sont reçues et converties en un premier signal de réception électrique ($U_{E1}$) avec au moins une première fréquence ($f_1$), et
- le premier signal de réception ($U_{E1}$) est évalué par rapport à l'au moins une grandeur de process, et

procédé pour lequel, dans un deuxième mode de fonctionnement

- aucun deuxième signal d'excitation n'est généré pour solliciter l'unité apte à vibrer (4),
- des vibrations mécaniques de l'unité vibrante (4), qui sont provoquées par au moins une première influence perturbatrice, sont reçues et converties en un deuxième signal électrique de réception ($U_{E2}$),
- au moins une deuxième fréquence ($f_2$) du deuxième signal électrique de réception ($U_{E2}$) étant déterminée, et
- l'au moins une deuxième fréquence étant associée à l'au moins une première influence perturbatrice pour le capteur vibronique (1).

**2.** Procédé selon la revendication 1,
pour lequel un contrôle d'état est effectué à l'aide d'une comparaison au moins du premier ($U_{E1}$) et du deuxième ($U_{E2}$) signal de réception, notamment de la première fréquence ($f_1$) et de la deuxième ($f_2$) fréquence.

**3.** Procédé selon la revendication 2,
pour lequel on détecte, à l'aide de la comparaison, si le premier signal de réception ($U_{E1}$) est influencé par l'influence perturbatrice.

**4.** Procédé selon la revendication 1 ou 2,
pour lequel, dans le premier mode de fonctionnement, l'unité apte à vibrer (4) est excitée en vibrations mécaniques à une fréquence de résonance.

**5.** Procédé selon la revendication 1,

pour lequel, pendant le premier mode de fonctionnement, le premier signal d'excitation ($U_{A1}$) est généré à partir du premier signal de réception ($U_{E1}$) de telle sorte qu'il existe au moins un déphasage ($\Delta\Phi$) prédéfinissable entre le premier signal d'excitation ($U_{A1}$) et le premier signal de réception ($U_{E1}$).

6. Procédé selon au moins l'une des revendications précédentes,
   pour lequel l'au moins une première influence perturbatrice est une vibration, notamment mécanique ou électrique.

7. Procédé selon au moins l'une des revendications précédentes,
   pour lequel, dans un troisième mode de fonctionnement, un troisième signal électrique d'excitation ($U_{A3}$) est généré, l'unité apte à vibrer (4) étant excitée au moyen du troisième signal d'excitation ($U_{A3}$), un troisième signal électrique de réception ($U_{E3}$) avec au moins une troisième fréquence ($f_3$) étant reçu par l'unité apte à vibrer (4).

8. Procédé selon au moins l'une des revendications précédentes,
   pour lequel le premier ($U_{A1}$) et/ou le troisième ($U_{A3}$) signal d'excitation est un signal à fréquence variable.

9. Procédé selon au moins l'une des revendications précédentes,
   pour lequel un premier, un deuxième et/ou un troisième spectre de fréquences du capteur vibronique (1) est généré à l'aide du premier ($U_{E1}$), du deuxième ($U_{E2}$) et/ou du troisième ($U_{E3}$) signal de réception.

10. Procédé selon la revendication 8,
    pour lequel le deuxième et/ou le troisième mode de fonctionnement est/sont exécuté(s) au moins à un premier et à un deuxième moment, et procédé pour lequel, à l'aide d'une comparaison du deuxième ($U_{E2}$) et/ou du troisième ($U_{E3}$) signal de réception au premier et au deuxième moment, on conclut à un défaut d'au moins un composant sur ou dans un point de mesure, sur ou dans lequel le capteur vibronique (1) est utilisé, ou on conclut à une condition de process modifiée.

11. Procédé selon au moins l'une des revendications précédentes,
    pour lequel, à l'aide du deuxième ($U_{E2}$) et/ou du troisième ($U_{E3}$) signal de réception, notamment à l'aide de la deuxième ($f_2$) et/ou de la troisième ($f_3$) fréquence ou à l'aide du deuxième et/ou du troisième spectre de fréquence, on génère un premier signal de réception adapté ($U_{E1}'$), notamment au moins une première fréquence adaptée ($f_1'$) ou un premier spectre de fréquence adapté, et l'au moins une grandeur de process étant déterminée et/ou surveillée à l'aide du premier signal de réception adapté ($U_{E1}'$).

12. Procédé selon au moins l'une des revendications précédentes,
    pour lequel la grandeur de process est un niveau prédéfini du produit (2) dans un réservoir (2a), la densité du produit (2) et/ou la viscosité du produit (2).

13. Dispositif destiné à la détermination et/ou à la surveillance d'au moins une grandeur de process d'un produit (2) dans un réservoir (2a) comprenant une unité électronique (6) et une unité apte à vibrer mécaniquement (4), l'unité électronique (6) étant conçue pour mettre en œuvre un procédé selon l'une des revendications précédentes.

14. Dispositif selon la revendication 13,
    pour lequel l'unité électronique (6) comporte au moins un élément de commutation (14a) pour commuter entre le premier et le deuxième mode de fonctionnement, ou au moins deux éléments de commutation (14a-14c) pour commuter entre le premier, le deuxième et/ou le troisième mode de fonctionnement.

15. Dispositif selon la revendication 9 ou 10,
    pour lequel l'unité apte à vibrer mécaniquement (4) est une lame vibrante, une monotige ou une membrane.

Fig. 1

4

5

A

B C

7

8b

8a

9b

D

9a

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006034105 A1
- DE 102007013557 A1
- DE 102005015547 A1
- DE 102009026685 A1
- DE 102009028022 A1
- DE 102010030982 A1
- DE 00102010030982 A1
- DE 10050299 A1

- DE 102007043811 A1
- DE 10057974 A1
- DE 102006033819 A1
- DE 102015102834 A1
- DE 102012101667 A1
- EP 3056877 A1
- DE 10131081 A1